# EUROPÄISCHE PATENTANMELDUNG

(11) **EP 0 708 238 A1**
(43) Veröffentlichungstag der Anmeldung: **24.04.1996**
(21) Anmeldenummer: 95110542.8
(22) Anmeldetag: 06.07.1995
(51) Int. Cl.: F02M 31/20, F28D 9/00, F28D 7/10

(54) **Kraftstoffkühler**

(30) Priorität: 18.10.1994 DE 4437167
(71) Anmelder: Witzenmann GmbH Metallschlauch-Fabrik Pforzheim, D-75175 Pforzheim (DE)
(72) Erfinder: Winzen, Wilfried Dr., 7775175 Pforzheim (DE)
(74) Vertreter: Lemcke, Rupert, Dipl.-Ing.

(57) **Zusammenfassung**

Es wird ein Kraftstoffkühler mit einem zylindrischen Gehäuse (3) und einem darin mit seinen Enden dicht festgelegten Balg (10) angegeben, der von einem Kühlmittel durchströmt ist, während der zwischen Balg (10) und Gehäuse (3) gebildete Raum vom dem zu kühlenden Kraftstoff durchströmt ist. Dabei ist vorgesehen, daß in den Balg (10) wenigstens ein hohlzylindrischer Leitkörper (11) eingesetzt ist, daß der Innenquerschnitt des Leitkörpers (11) durch eine Wand (13) verschlossen ist, daß sich die Wand (13) von einem Leitkörperende zu dessen anderen Ende erstreckt, und daß der Leitkörpermantel auf quer zur Wand einander gegenüberliegenden Seiten wenigstens je eine Öffnung (14,15,18) zum Kühlmitteldurchtritt aufweist.

## Beschreibung

Die Erfindung betrifft einen Kraftstoffkühler mit einem zylindrischen Gehäuse und einem darin weitgehend koaxial angeordneten, mit seinen Enden dicht am Gehäuse festgelegten gewellten Balg, der über endständige Anschlüsse des Gehäuses von einem Kühlmittel durchströmt ist, während der zwischen Balg und Gehäuse bzw. durch die nach radial außen offenen Balgwellen gebildete Raum über radiale Gehäuseanschlüsse vom zu kühlenden Kraftstoff durchströmt ist.

Um bei Verbrennungskraftmaschinen eine optimale Verbrennung des Kraftstoffes bei geringstmöglicher Schadstoffemission zu erreichen, wird in letzter Zeit dazu übergegangen, den überschüssigen Kraftstoff im Rücklauf vom Vergaser bzw. der Einspritzpumpe herunterzukühlen. Man ist dabei bestrebt, bei möglichst geringen Abmessungen des Wärmetauschers einen hohen Kühleffekt, also eine hohe Warmeübertragungsleistung, herbeizuführen.

Ein vom Kühlmittel und dem Kraftstoff im wesentlichen axial durchströmter Kraftstoffkühler der eingangs genannten Art ist durch die DE-PS 31 53 101 bekannt. Bei den dort dargestellten Ausführungsformen liegen beide Anschlüsse für den Kraftstoff am gleichen Ende des Kraftstoffkühlers, so daß der Kraftstoff nach Durchfließen eines ersten, zentralen Balges, der von dem Kühlmittel umströmt ist, auf die Außenseite eines darum mit Abstand angeordneten zweiten Balges gelangt, dessen beide Enden mit dem den zweiten Balg mit Abstand umgebenden Gehäusemantel dicht verbunden sind. Im Zusammenhang mit diesem Stand der Technik wird der Balg als Wellschlauch bezeichnet. Solche ein- oder mehrlagigen gewellten Schläuche oder Bälge können schraubengangförmig oder ringförmig gewellt sein. Beide Bauformen kommen nachfolgend grundsätzlich in Frage, wobei jedoch ringgewellten Bälgen bzw. Wellschläuchen der Vorzug gegeben wird. Bezüglich des Materials für das Gehäuse und den Balg kommt es auf genügend Temperaturbeständigkeit und Resistenz gegenüber dem Kühlmittel und dem Kraftstoff an, überlicherweise finden geeignete Metalle oder Kunststoffe Verwendung.

Der bekannte Kraftstoffkühler ist in seiner Bauform kompliziert insbesondere im Hinblick auf die Anbringung der strömungsleitenden Einbauten, die zahlreiche schwer anzubringende Verbindungen in Form von Schweißnähten oder dergleichen erfordern. Dadurch verteuert sich der bekannte Kraftstoffkühler auch, da es insbesondere schwierig ist, Bälge mit Anschlußstutzen zu verschweißen. So ist dieser Kraftstoffkühler im wesentlichen nur für Großserien geeignet.

Eine entsprechende Beurteilung gilt für den Kraftstoffkühler nach der DE-PS 34 40 060, bei der der äußere Balg durch eine schraubengangförmig umlaufende Wellschlauchwendel gebildet ist, die an beiden Enden mit den Anschlußstutzen verschweißt werden muß.

Aufgabe der Erfindung ist es, einen Kraftstoffkühler der eingangs genannten Art hinsichtlich seines konstruktiven Aufbaus zu vereinfachen, so daß er ohne Schwierigkeiten leicht aus Serienteilen bzw. einfach und billig herzustellenden Teilen insbesondere bei einfacher Herstellung der Befestigungsverbindungen, in der Regel von Schweißnähten, gefertigt werden kann.

Diese Aufgabe ist erfindungsgemäß dadurch gelöst, daß in den Balg wenigstens ein hohlzylindrischer Leitkörper mit einem dem lichten Innenquerschnitt des Balges entsprechenden Außenquerschnitt eingesetzt ist, daß der Innenquerschnitt des Leitkörpers durch eine diesen ausfüllende Wand verschlossen ist, daß die Wand sich von einem Ende des Leitkörpers bis zu dessen anderem Ende erstreckt, und daß der Mantel des Leitkörpers auf quer zur Wand einander gegenüberliegenden Seiten wengistens je eine Öffnung zum Durchtritt des Kühlmittels zwischen dem Inneren des Leitkörpers und dem durch die nach radial innen offenen Balgwellen gebildeten Raum aufweist.

Diese Maßnahmen haben die Wirkung, daß nunmehr nur noch ein zylindrischer Balg zentrisch in den Gehäusemantel eingesetzt und mit seinen Enden am Gehäuse festgelegt werden muß, was im Falle einer Schweißverbindung einer einfachen Rundschweißnaht entspricht. Durch den eingesetzten, erfindungsgemäßen Leitkörper wird nun der Kühlmittelstrom über die Öffnung auf einer Seite der Wand in den durch die Flanken der Balgwellen gebildeten Raum geleitet, muß dann von dort aus die Balgwellen nach beiden Seiten hin halbkreisförmig um den durch den Leitkörper gebildeten Mantel herum durchlaufen und gelangt schließlich über die Öffnung auf der anderen Seite der Wand wieder in den zentralen Strömungsquerschnitt. Dadurch ist erreicht, daß die durch den Balg nach radial innen hin angebotene Wärmeaustauschfläche vollständig und gut vom Kühlmittel angeströmt ist, was zu einer verhältnismäßig kleinen Bauform des Kraftstoffkühlers führt.

Außerdem ist, wie ersichtlich, ein solcher Kraftstoffkühler einfach und auch in kleinen Stückzahlen unterschiedlicher Größe leicht herstellbar, indem es im wesentlichen nur eines hohlzylindrischen Stückes eines Gehäuserohres, eines Balges entsprechender Länge und des einzusetzenden Leitkörpers bedarf, wobei diese Teile für unterschiedliche Wärmeaustauschleistungen leicht in verschiedener Länge hergestellt werden können bzw. bezüglich des Leitkörpers durch dessen mehrfache Aneinanderreihung aufgebaut sein können.

Die Wand des Leitkörpers kann unterschiedliche Formen aufweisen je nachdem, wie der Kühlmittelstrom eventuell noch zusätzlich beeinflußt werden soll. Zweckmäßig ist es jedoch, daß die Wand eben ausgebildet und zur Strömungsrichtung des Kühlmittels geneigt angeordnet ist. Dann hat die Wand eine elliptische Außenkontur und bietet dem Kühlmittel einen größtmöglichen Strömungsquerschnitt sowohl beim Kühlmittelzutritt als auch beim Kühlmittelaustritt.

Üblicherweise wird vorgesehen sein, daß in Strömungsrichtung des Kühlmittels gesehen die Länge des Leitkörpers im wesentlichen der Länge des Balges entspricht.

Wie vorstehend bereits angedeutet, kann jedoch für längere Kraftstoffkühler auch vorgesehen sein, daß wenigstens zwei Leitkörper einer Grundbauform hintereinander angeordnet sind, wobei die Anordnung auch so erfolgen kann, daß benachbarte Leitkörper senkrecht zur Strömungsrichtung des Kühlmittels um 180° gegeneinander gedreht sind.

Wie geschildert, hat der Leitkörper einen einfachen Aufbau, so daß er leicht als Spritzgußteil aus kühlmittelbeständigem Kunststoff ausgebildet sein kann, damit also ein sehr billiges Bauteil ist, das sich durch einfaches Einstecken in den Balg auch leicht montieren läßt. Die Wahl des Kunststoffes so, daß er gegen ein Kühlmittel, wie es beispielsweise auch bei Kälteaggregaten von Kraftfahrzeug-Klimaanlagen Verwendung findet, beständig ist, bereitet keine Schwierigkeiten.

Was die Öffnungen des Leitkörpermantels zu beiden Seiten der Wand betrifft, so können diese je durch einen sich in Längsrichtung des Leitkörpers erstreckenden Schlitz gebildet sein und es können sich die Schlitze jeweils vom Treffpunkt der Wand mit dem Leitkörpermantel bis in den Bereich neben dem in Längsrichtung gegenüberliegenden Ende des Leitkörpermantels erstrecken. Anstelle solcher schlitzförmiger Öffnungen können jedoch auch entsprechend angeordnete Reihen von Bohrungen des Leitkörpermantels vorgesehen sein so, daß sich ein ausreichender Durchtrittsquerschnitt für das Kühlmittel ergibt.

Vorteilhaft ist es, daß die Gehäuseanschlüsse für den Kraftstoff je im Bereich eines der einander gegenüberliegenden Enden des zylindrischen Gehäusemantels angeordnet sind, wobei je nach den Einbaunotwendigkeiten unterschiedliche Umfangspositionen für die Gehäuseanschlüsse vorgesehen sein können, so daß der Kraftstoff den Kühler zwischen seinen Enden beispielsweise diagonal durchströmt, wenn zwischen Balg und Gehäuse entsprechender Platz gelassen wird. Gerade für die nachfolgend beschriebenen Bauformen kann jedoch insbesondere vorgesehen sein, daß die Gehäuseanschlüsse auf einer gemeinsamen axialen Mantellinie des Gehäusesmantels angeordnet sind.

Um eine gute Umströmung des Balges durch den Kraftstoff zu gewährleisten, ist es zweckmäßig, daß der zwischen Gehäuse und Balg gebildete Raum zwischen den Gehäuseanschlüssen in mehrere in Strömungsrichtung des Kraftstoffes hintereinander geschaltete Strömungsräume unterteilt ist, damit der Kraftstoff zu entsprechend mehreren Umlenkungen und damit einer guten Umströmung des Balges gezwungen wird.

Hierzu kann bei einer ersten Bauform vorgesehen sein, daß Gehäuse und Balg praktisch spielfrei ineinandersitzen, daß der Gehäusemantel im Bereich der Gehäuseanschlüsse nach außen und aufeinander zu gerichtete erste Ausbeulungen aufweist, daß die aufeinander zu gerichteten Enden der ersten Ausbeulungen einen kurzen gegenseitigen Abstand aufweisen, und daß der Gehäusemantel im wesentlichen den Gehäuseanschlüssen gegenüber eine weitere, sich über einen kurzen Umfangsbereich des Gehäusemantels erstreckende Ausbeulung von gegenüber jeder der ersten Ausbeulungen im wesentlichen der doppelten axialen Erstreckung aufweist.

Auf diese Weise wird der Kraftstoff ausgehend von einem Gehäuseanschluß auf einen über den Längsquerschnitt des Kraftstoffkühlers gesehen hin- und hergehenden Weg bis zum anderen Gehäuseanschluß geschickt, wobei er jeweils den Balg beidseits halbbogenförmig umströmen muß, bis er von der einen Ausbeulung zu der dieser gegenüberliegenden nächsten Ausbeulung gelangt. Dadurch ist eine gute und gleichmäßige Beströmung sämtlicher Flanken der nach außen offenen Balgwellen und damit ein guter Wärmeaustausch gesichert.

Um den hin- und hergehenden Weg des Kraftstoffes zu verlängern, kann vorgesehen sein, daß Gehäuse und Balg praktisch spielfrei ineinandersitzen, daß der Gehäusemantel im Bereich der Gehäuseanschlüsse nach außen und aufeinander zu gerichtete erste Ausbeulungen aufweist, daß der Gehäusemantel im wesentlichen den Gehäuseanschlüssen gegenüber je eine weitere, sich über einen kurzen Umfangsbereich des Gehäusemantels erstreckende Ausbeulung von gegenüber jeder der ersten Ausbeulungen im wesentlichen der doppelten axialen Erstreckung aufweist, daß die aufeinander zu gerichteten axiale Enden der weiteren Ausbeulungen einen kurzen gegenseitigen Abstand aufweisen, daß in Axialrichtung zwischen den Gehäuseanschlüssen eine dritte sich über einen kurzen Umfangsbereich erstreckende Ausbeulung des Gehäusemantels vorgesehen ist, und daß die axialen Enden der dritten Ausbeulung einen kurzen axialen Abstand von den jeweis benachbarten Enden der ersten Ausbeulungen aufweisen.

Vorstehend ist ein zickzackförmig hin und hergehender Verlauf zwischen den beiden Gehäuseanschlüssen beschrieben. Selbstverständlich läßt sich dieser zickzackförmige Verlauf insbesondere für axial längere Kraftstoffkühler vervielfachen, indem weitere im wesentlichen einander gegenüberliegende Ausbeulungen des Gehäusemantels auf der Strecke zwischen den beiden Gehäuseanschlüssen vorgesehen werden, wobei die Führung des zickzackförmigen Verlaufes auch so hinsichtlich ihres Beginns und ihres Endes eingerichtet sein kann, daß sich die Gehäuseanschlüsse auf einander gegenüberliegenden Gehäuseseiten anbringen lassen.

Anstelle der beschriebenen Ausbeulungen des Gehäusemantels kann bei einer zweiten Bauform nach den Ansprüchen 14 und 15 auch vorgesehen sein, daß der Balg an entsprechenden Stellen Einbeulungen seiner Außenkontur aufweist, um an den Gehäuseanschlüssen den Zu- bzw. Austritt des Kraftstoffes zu ermöglichen und dazwischen die zickzackförmige Umströmung des im übrigen praktisch spielfrei im Gehäusemantel sitzenden Balges.

Als dritte Bauform kann aber auch vorgesehen sein, daß Gehäuse und Balg einen radialen Abstand voneinander aufweisen, daß der so gebildete Zwischenraum durch einen hohlzylindrischen Führungskörper ausgefüllt ist, daß der Führungskörper im Bereich der Gehäuseanschlüsse erste aufeinander zu gerichtete Ausnehmungen aufweist, daß die aufeinander zu gerichteten Enden der ersten Ausnehmungen einen kurzen gegenseitigen Abstand aufweisen, und daß der Führungskörper im wesentlichen den Gehäuseanschlüssen gegenüber eine weitere, sich über einen kurzen Umfangsbereich erstreckende Ausnehmungen von gegenüber jeder der ersten Ausnehmungen im wesentlichen der doppelten axialen Erstreckung aufweist.

Soll auch in diesem Fall ein längerer, zickzackförmiger Kraftstoffverlauf erreicht werden gegebenfalls gerade auch für einander gegenüber oder im Winkel zueinander liegende Gehäuseanschlüsse, so kann vorgesehen sein, daß Gehäuse und Balg einen radialen Abstand voneinander aufweisen, daß der so gebildete Zwischenraum durch einen hohlzylindrischen Führungskörper ausgefüllt ist, daß der Führungskörper im Bereich der Gehäuseanschlüsse erste aufeinander zu gerichtete Ausnehmungen aufweist, daß der Führungskörper im wesentlichen den Gehäuseanschlüssen gegenüber je eine weitere, sich über einen kurzen Umfangsbereich erstreckende Ausnehmung von gegenüber jeder der ersten Ausnehmungen im wesentlichen der doppelten axialen Erstreckung aufweist, daß die aufeinander zu gerichteten axialen Enden der weiteren Ausnehmungen einen kurzen gegenseitigen Abstand aufweisen, daß in Axialrichtung zwischen den Gehäuseanschlüssen eine dritte sich über einen kurzen Umfangsbereich erstreckende Ausnehmung des Führungskörpers vorgesehen ist, und daß die axialen Enden der dritten Ausnehmung einen kurzen axialen Abstand von den jeweils benachbarten Enden der ersten Ausnehmungen aufweisen.

In beiden vorgenannten miteinander konstruktiv zusammenhängenden Fällen sind also Gehäusemantel und Balg unverändert geblieben und es sind statt der Ausbeulungen bzw. Einbeulungen Ausnehmungen des Führungskörpers vorgesehen, die wiederum zu dem genannten hin- und hergehenden bzw. zickzackförmigen Strömungsverlauf des Kraftstoffes zwingen. Auch hier ist die Vervielfachung bzw. Verlängerung des zickzackförmigen Verlaufes gegenüber der vorstehend geschilderten Bauform einfach durch Anbringen weiterer einander gegenüberliegender Ausnehmungen des Mantels des Führungskörpers möglich.

Ebenso wie der in das innere des Balges einzusetzende Leitkörper kann auch der Führungskörper als einfaches Spritzgußteil aus gegenüber dem Kraftstoff beständigem Kunststoff ausgebildet sein, so daß er als Massenartikel kostengünstig herstellbar ist. Seine Montage geschieht einfach dadurch, daß er mit bezüglich seiner Umfangsrichtung entsprechender Positionierung zwischen Gehäusemantel und Balg gesteckt wird, wobei die Positionierung nur sicherstellen muß, daß zu den Gehäuseanschlüssen auch die passenden Ausnehmungen des Führungskörpers kommen. Um dies in einfacher Weise sicherzustellen und auch ein Verdrehen des Führungskörpers während des Betriebs zu verhindern, kann vorgesehen sein, daß beispielsweise der einen der Gehäuseanschlüsse bildende Stutzen mit einer an ihm ausgebildeten Nase in das Gehäuseinnere und dort in die zugeordnete Ausnehmung des Führungskörpers ragt.

Als vierte Bauform kann schließlich vorgesehen werden, daß Gehäuse und Balg einen radialen Abstand voneinander auweisen, daß eine axial im wesentlichen mittig zwischen den Gehäuseanschlüssen gelegene Balgwelle im Außendurchmesser auf den Innendurchmesser des Gehäuses vergrößert ist und daß diese Balgwelle und das Gehäuse auf der den Gehäuseanschlüssen abgewandten Seite durch eine örtliche Eindrückung der Balgwelle bzw. eine örtliche Ausbeulung des Gehäuses einen gegenseitigen Abstand aufweisen. Damit ist wiederum dem Kraftstoff zwischen den Gehäuseanschlüssen eine hin- und hergehende Bewegung aufgezwungen.

Wenn man auch in diesem Falle zu einer zickzackförmigen Kraftstofführung kommen will, so geschieht dies dadurch, daß Gehäuse und Balg einen radialen Abstand voneinander aufweisen, daß der Balg zwischen den Gehäuseanschlüssen axialsymmetrisch verteilt mehrere im Außendurchmesser auf den Innendurchmesser des Gehäuses vergrößerte Balgwellen aufweist, und daß die Balgwellen und das Gehäuse abwechselnd auf einander gegenüberliegenden Seiten durch eine örtliche Eindrückung der Balgwellen bzw. örtliche Ausbeulungen des Gehäuses einen gegenseitigen Abstand derart aufweisen, daß die Eindrückungen bzw. die Ausbeulungen betreffend die den Gehäuseanschlüssen benachbarten Balgwellen den Gehäuseanschlüssen gegenüberliegen. Auch hier läßt sich also wieder dem zickzackförmigen Verlauf eine beliebige Länge geben und es besteht auch die Möglichkeit, die Gehäuseanschlüsse nicht nur auf einer Mantellinie des Gehäuses anzuordnen sondern auch beispielsweise einander diametral gegenüber.

Bezüglich der Ausbildung des Gehäuses kann vorgesehen sein, daß das Gehäuse aus einem Hohlzylinderabschnitt mit daran endständig befestigten, die Anschlüsse für das Kühlmittel bildenden, sich im wesentlichen radial erstreckenden Deckeln besteht. Dabei ist es zweckmäßig, daß die Balgenden in die Befestigung zwischen Hohlzylinderabschnitt und Deckeln mit einbezogen sind, so daß durch Anbringung beispielsweise einer einfachen, außenliegenden Rundschweißnaht alle drei Teile dicht miteinander verbunden sind.

Es kann jedoch auch vorgesehen sein, daß die zylindrisch ausgebildeten Balgenden innerhalb der Anschlüsse sitzen und in die Befestigung der Anschlüsse an weiterführenden Kühlmittelleitungen mit einbezogen sind.

Auch kann, um die erwähnten Deckel einzusparen, bei entsprechender Starkwandigkeit des Balges vorgesehen sein, daß das Gehäuse aus einem Hohlzylinderabschnitt besteht, daß die Balgenden zylindrisch geformt sind und die Anschlüsse für das Kühlmittel bilden, und daß der Balg mit den Gehäuseenden dicht verbunden ist.

Neben diesen bevorzugten Ausführungsformen besteht selbstverständlich bei aus Hohlzylinderabschnitten und Deckeln gebildeten Gehäusen allgemein die Möglichkeit, die Balgenden an beliebigen radialen Stellen der sich im wesentlichen radial erstreckenden Deckelwandungen zu befestigen.

Vorstehend ist bezüglich der Ausbildung des Balges dessen regelmäßige Wellung insbesondere hinsichtlich des Axialabstandes benachbarter Wellenflanken unterstellt worden, also keine wesentliche Beeinflussung des Kühlmittelstromes sowie des Kraftstoffstromes durch die Geometrie des Balges. Auch hier kann jedoch der Wärmeaustausch dadurch beeinflußt werden, daß die axiale Breite von nach radial außen offenen Balgwellen und radial innen offenen Balgwellen unterschiedlich ist, die jeweiligen Balgwellen also entsprechend unterschiedliche Kapazität im Hinblick auf die durchsetzbaren Volumina aufweisen.

Schließlich ist vorstehend bezüglich des Gehäuses, des Balges, des Leitkörpers und des Führungskörpers von deren hohlzylindrischer Ausbildung gesprochen worden. Hier ist regelmäßig die Verwendung eines Kreisquerschnittes zweckmäßig, da dazu das Vormaterial für den Hohlzylinderabschnitt des Gehäuses sowie den Balg am gängigsten sind. Selbstverständlich besteht jedoch auch die Möglichkeit von Hohlzylindern mit elliptischen, polygonalem oder sonstigem geeignetem Querschnitt je nachdem, welche Vorschriften beispielsweise gerade auch für den Einbau des Kraftstoffkühlers entsprechend dem zur Verfügung stehenden Bauraum gemacht werden.

Weitere Merkmale und Einzelheiten der Erfindung ergeben sich aus der nachfolgenden Beschreibung von Ausführungsformen, die auf der Zeichnung dargestellt sind. In der Zeichnung zeigen:
- Figur 1: einen Kraftstoffkühler mit kreiszylindrischem Querschnitt im mittigen Längsschnitt;
- Figur 2: die Einzelansicht des Leitkörpers aus Figur 1;
- Figur 3: die Schnittansicht III-III aus Figur 2;
- Figur 4: die perspektivische Darstellung des Führungskörpers aus Figur 1;
- Figur 5 bis 7: einzelne Verbindungsgestaltungen zwischen Gehäusemantel und Balg;
- Figur 8: eine weitere Ausbildung eines Kraftstoffkühlers im mittigen Längsschnitt;
- Figur 9 und 11: die Schnittansicht IX-IX aus Figur 8 und
- Figur 10: eine Variante der Ausbildung gemäß Figur 8 und 9.

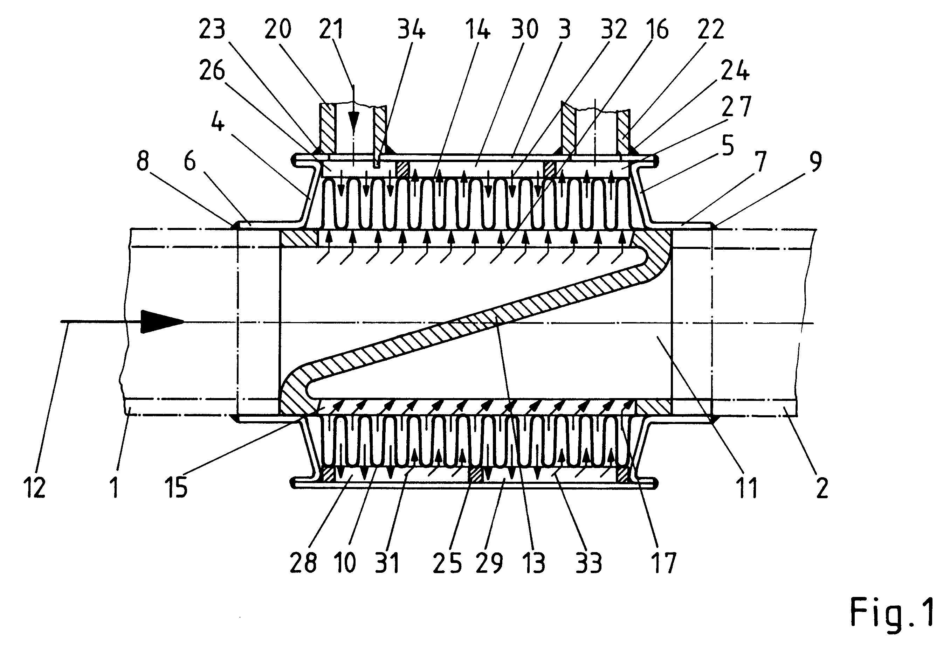

Figur 1 zeigt im Längsschnitt einen Kraftstoffkühler mit Kreisquerschnitt, wie er zwischen den Enden einer Kühlmittel zuführenden Leitung 1 und einer Kühlmittel abführenden Leitung 2 angeordnet ist.

Der Kraftstoffkühler weist ein Gehäuse auf, das aus einem Hohlzylinderabschnitt 3 und Deckeln 4 ,5 besteht, die Anschlüsse 6, 7 für das Kühlmittel bilden, in die die Enden der Leitung 1, 2 eingesteckt und bei 8, 9 angeschweißt sind.

Im Gehäusemantel 3 sitzt unter Bildung eines radialen Abstandes ein ringgewellter Balg 10, dessen gewellte Länge im wesentlichen der Länge des Mantels 3 entspricht. Der Balg läuft in zylindrischen Enden aus, die spielfrei innerhalb der Anschlüsse 6, 7 sitzen und in die Schweißverbindungen 8, 9 mit eingefangen sind.

Innerhalb des Balges sitzt praktisch spielfrei ein hohlzylindrischer Leitkörper 11, dessen axiale Länge im wesentlichen der Länge des Balges 10 entspricht. Der Leitkörper 11 weist eine zur Strömungsrichtung 12 des Kühlmittels geneigt angeordnete ebene Wand auf, die sich über die gesamte Länge des Leitkörpers 11 erstreckt und mit ihrem bezogen auf die Strömungsrichtung 12 vorderen und hinteren Ende mit dem benachbarten Ende des Leitkörpers einstückig verbunden ist.

Auf beiden Seiten der Wand 13 sind im hohlzylindrischen Mantel des Leitkörpers 11 schlitzförmige Öffnungen 14, 15 gebildet, die senkrecht zur ebenen Wand 13 einander diametral gegenüberliegen. Die sich längs einer achsparallelen Mantellinie des Leitkörpers 11 erstreckenden Öffnungen 14, 15 enden auf ihrer der Wand 13 abgewandten Seite jeweils vor dem Ende des Leitkörpers 11, weisen also eine ringsum geschlossene Kontur auf.

Die geschilderte Ausbildung und Anordnung des Leitkörpers hat die Wirkung, daß das entsprechend dem Pfeil 12 zuströmende Kühlmittel auf der bezogen auf Figur 1 oberen Seite der Wand 13 über die Öffnung 14 entsprechend den Pfeilen 16 in die nach innen offenen Wellen des Balges 10 gelenkt wird. Von da aus muß es entlang dem Äußeren des Leitkörpermantels die Balgwellen bis zur Öffnung 15 durchströmen. Über die Öffnung 15 gelangt dann das Kühlmittel entsprechend den Pfeilen 17 auf der anderen Seite der Wand 13 wieder in das Innere des Leitkörpers 11, von wo es über die Leitung 2 weiterfließen kann. Auf diese Weise steht dem Kühlmittel an beiden Enden des Kraftstoffkühlers der volle Querschnitt des Leitkörpers 11 zur Verfügung, während es doch auf der anderen Seite in seiner Gänze durch die nach innen offenen Wellen des Balges 10 gezwungen wird, um dort zu einem optimalen Wärmeaustausch mit der noch zu beschreibenden Kraftstoffströmung zu kommen.

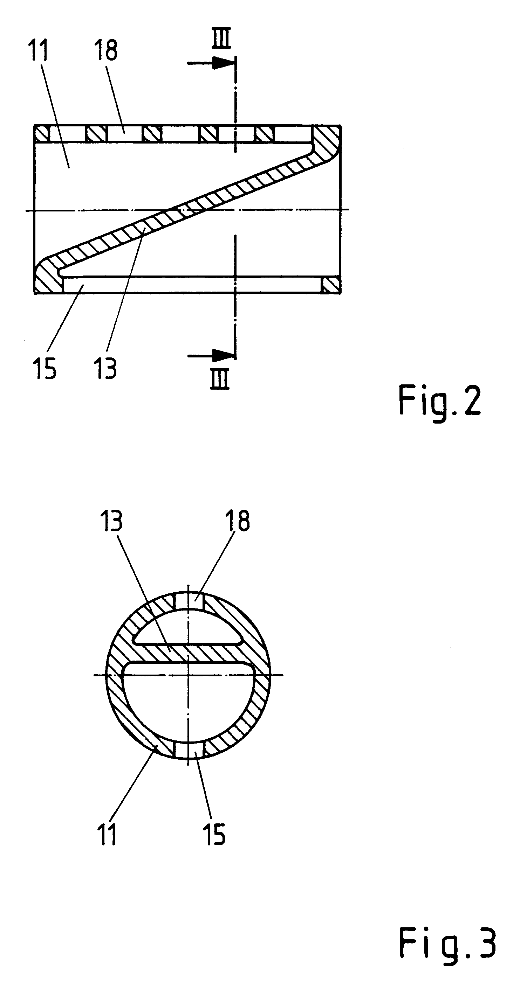

Der Leitkörper 11 ist noch einmal in den Figuren 2 und 3 vereinzelt dargestellt. Dort ist in Figur 2 auf der Unterseite der Wand 3 die schlitzförmige Öffnung 15 ersichtlich. Auf der Oberseite der Wand 13 ist ersichtlich, daß eine solche schlitzförmige Öffnung auch zur stabileren Ausbildung des Leitkörpers 11 in Umfangsrichtung durch eine Reihe von Bohrungen 18 ersetzt sein kann. Figur 3 zeigt den Schnitt III-III in Figur 2 mit der entsprechenden Schnittstelle der Wand 13.

Was den zu kühlenden Kraftstoff betrifft, so strömt dieser dem Inneren des Gehäusemantels 3 über einen Anschlußstutzen 20 entsprechend der Pfeilrichtung 21 zu. Der Stutzen 20 ist ebenso wie der Stutzen 22 des Kraftstoffaustrittes aus dem Kraftstoffkühler mittels einer Rundschweißnaht 23, 24 am Gehäusemantel 3 befestigt.

Zwischen dem hohlzylindrischen Abschnitt 3 des Gehäusemantels und dem Außenquerschnitt des Balges 10 besteht ein radialer Abstand, der durch einen hohlzylindrischen Führungskörper 25 für die Strömung des Kraftstoffes ausgefüllt ist, wobei der Führungskörper 25 praktisch spielfrei auf dem Balg 10 und im Mantel 3 sitzt. Die axiale Länge des Führungskörper 25 entspricht der gewellten Länge des Balges 10 zwischen den radialen Wandungsteilen der Deckel 4, 5.

Im Bereich der Anschlüsse 20, 22 weist der Führungskörper 25 Ausnehmungen 26, 27 auf, denen Ausnehmungen 28, 29 diametral gegenüberliegen, die praktisch in Axialrichtung die doppelte Länge wie die Ausnehmungen 26, 27 haben. Die Ausnehmungen 28, 29 lassen an den Enden des Führungskörper 25 Material stehen und haben mit ihren aufeinander zu gerichteten Enden einen kurzen gegenseitigen Abstand, während die Ausnehmungen 26, 27 zu den Enden des Führungskörpers 25 hin offen sein können.

Zwischen den Ausnehmungen 26, 27 weist der Führungskörper 25 eine weitere Ausnehmung 30 auf, deren axiale Enden gegenüber den benachbarten Enden der Ausnehmungen 26, 27 einen geringen Abstand haben.

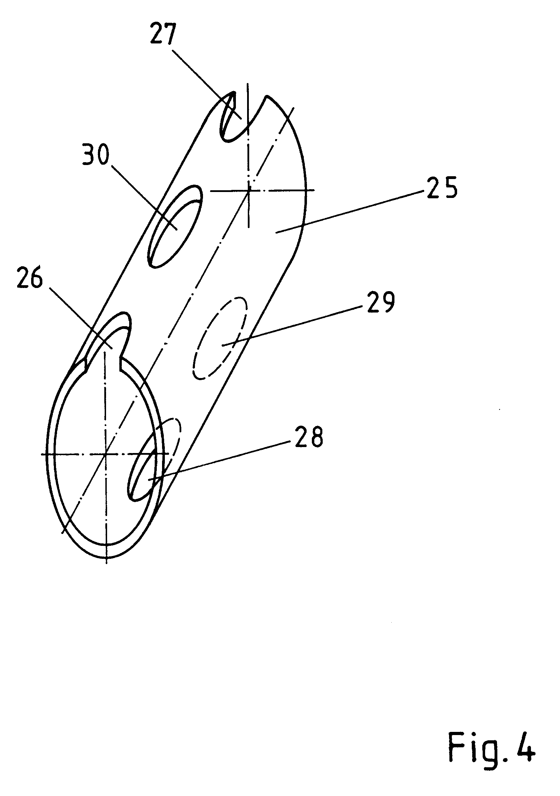

Durch diese Ausbildung des Führungskörpers 25, der in Figur 4 noch einmal in perspektivischer Ansicht dargestellt ist, strömt der Kraftstoff in nach außen offenen Wellen im Bereich des Anschlusses 20 über die Ausnehmung 26 zu und läuft von da aus innerhalb der zylindrischen Wandung des Führungskörpers 25 um je einen halben Bogen um den Balg 10 bis zur gegenüberliegenden Ausnehmung 28, wo ein Wechsel zwischen den zuerst durchströmten Balgwellen zu den daneben liegenden Balgwellen entlang der Pfeile 31 stattfindet. Nunmehr wird der Balg 10 wieder in halbkreisförmigen Bögen bis zur Ausnehmung 30 umströmt, wo wiederum ein Wechsel der beströmten Balgwellen entsprechend den Pfeilen 32 stattfindet. Nach erneuter Umströmung des Balges 10 gelangt der Kraftstoff über die Ausnehmung 29 schließlich entlang der Pfeile 33 zu den Balgwellen, die der Ausnehmung 27 zugeordnet sind, über die der Kraftstoff nach einer letzten Umströmung des Balges 10 den Kühler durch den Anschluß 22 verläßt.

Beim dargestellten Beispiel ist also die Aufteilung des Strömungsweges des Kraftstoffes praktisch in vier Kammern erfolgt, denen jeweils drei nach außen offene Balgwellen zugehören. Selbstverständlich besteht die Möglichkeit, bei beispielsweise axial länger bauenden Kraftstoffkühlern die Zahl einander gegenüberliegender Ausnehmungen des Führungskörpers 25 zu vergrößern, um die Umströmung des Balges 10 zu vervielfachen. Wesentlich ist nur, daß in Strömungsrichtung sich einander gegenüberliegende Ausnehmungen in Axialrichtung des Kraftstoffkühlers teilweise überdecken, damit mit Ausnahme des Bereichs der Anschlüsse 20, 22 jeweils ein Wechsel der Balgwellen für den Kraftstoffstrom stattfinden kann.

Damit sich der Führungskörper 25 nicht in Umfangsrichtung verschieben kann, weist der Anschlußstutzen 20 eine in das Gehäuseinnere und in die Ausnehmung 26 ragende Nase 34 auf.

Der beschriebene Verlauf des Kraftstoffstromes durch den Kühler führt dazu, daß der Kraftstoff ständig entlang den die nach außen offenen Balgwellen bildenden Flanken zwangsgeführt wird, so daß ein optimaler Wärmeaustausch mit dem auf der anderen Seite der Flanken strömenden Kühlmittel stattfinden kann.

Anstelle des Führungskörpers 25 kann auch vorgesehen sein, daß der Balg 10 praktisch spielfrei innerhalb des Hohlzylinderabschnittes 3 des Kühlergehäuses sitzt und daß die Ausnehmungen 26 bis 30 des Führungskörpers 25 durch Ausbeulungen des Kühlergehäuses und/oder Einbeulungen des Balges 10 gebildet werden, wobei die Positionen und Ausdehnungen dieser Ausbeulungen bzw. Einbeulungen den Positionen und Ausdehnungen der Ausnehmungen 26 bis 30 zu entsprechen haben. Die Wirkung für den Verlauf des Kraftstoffstromes entspricht dann der bereits im Zusammenhang mit dem Führungskörper 25 Beschriebenen.

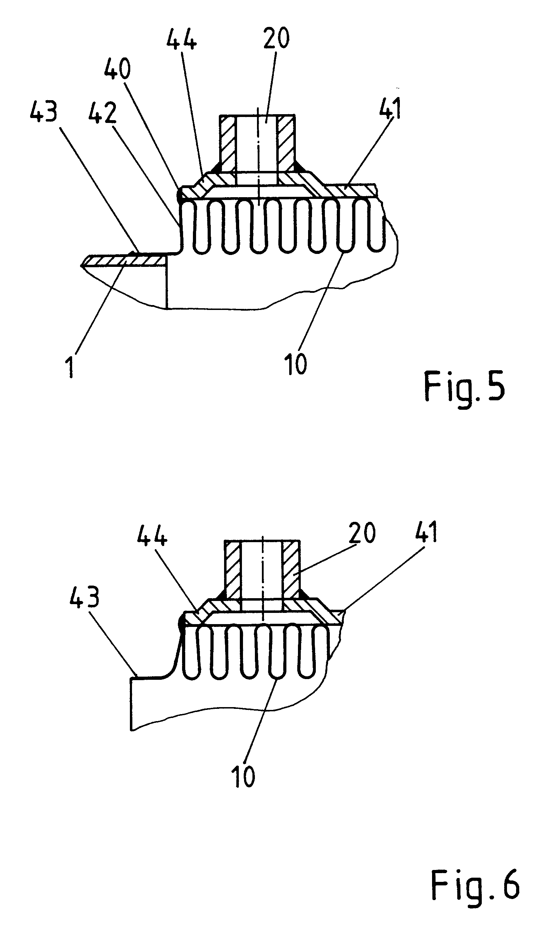

Figur 5 zeigt ausschnittweise das linke obere Ende eines dem Kraftstoffkühler gemäß Figur 1 ähnlichen Kraftstoffkühlers.

Hier ist jedoch der Deckel 4 dadurch ersetzt, daß der Balg 10 am Scheitel 40 seiner endständigen Balgwelle mit dem Gehäusemantel 41 dicht verschweißt ist. Die äußere Flanke 42 ist dann der Ersatz für den Deckel 4. Es ist der zylindrisch ausgebildete Hals 43 des Balges 10 mit der Leitung 1 verschweißt. Auf diese Weise lassen sich die Deckel 4, 5 gemäß Figur 1 ersparen, denn die in Figur 5 gezeigte Ausbildung gilt natürlich gleichermaßen für das gegenüberliegende Ende des Kraftstoffkühlers. Allerdings setzt die Bauform gemaß Figur 5 einen Balg 10 genügender Wandstärke voraus.

Figur 5 zeigt außerdem im Bereich des Anschlusses 20 eine Ausbeulung 44 der vorher im Zusammenhang mit einer Alternative zum Führungskörper 25 beschriebenen Art.

Figur 6 stellt eine Abwandlung des Gegenstandes gemäß Figur 5 dahingehend dar, daß die letzte Balgwelle auf Block gestaucht ist, um dieser Endausbildung eine höhere Stabilität zu geben.

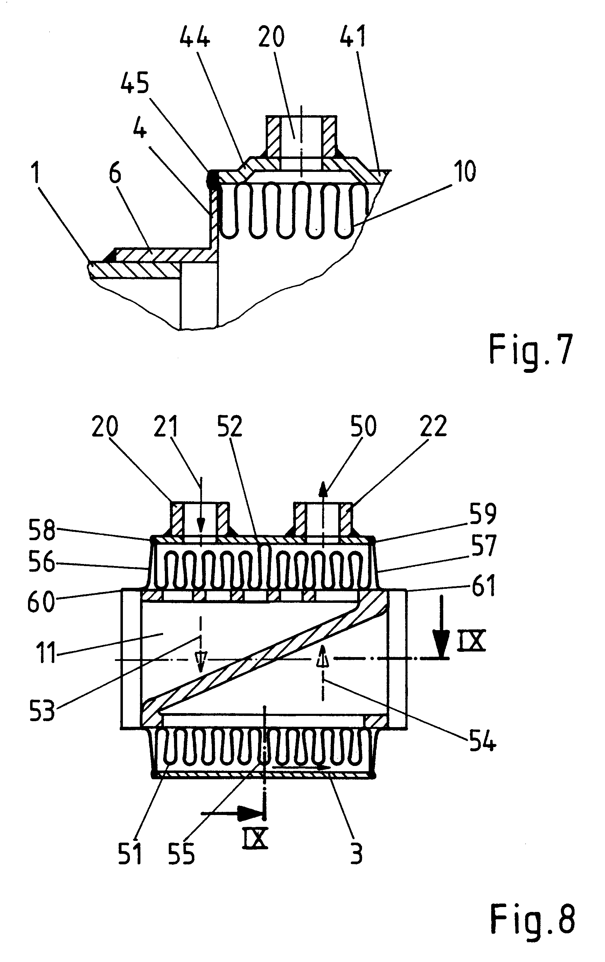

Figur 7 zeigt in einer mit der Ausführungsform gemäß Figur 1 vergleichbaren Darstellung, wie das Ende des Balges 10 in die Schweißverbindung 45 zwischen Gehäuse 41 und Deckel 4 mit einbezogen sein kann. Selbstverständlich kann das Ende des Balges 10 auch an von den Ausführungsformen gemäß Figur 1 und 7 abweichenden Stellen mit dem Deckel 4 bzw. 5 oder dem Gehäuse sowie schließlich den Leitungen 1, 2 verbunden sein.

Figur 8 zeigt in vereinfachter mittiger Längsschnittdarstellung eine weitere Ausführungsform eines Kraftstoffkühlers wiederum mit einem aus einem Hohlzylinderabschnitt 3 gebildeten Gehäuse mit Anschlußstutzen 20, 22 für den Zustrom 21 und den Abstrom 50 des Kraftstoffes sowie einem Leitkörper 11 der anhand der Figuren 1 bis 3 geschilderten Art.

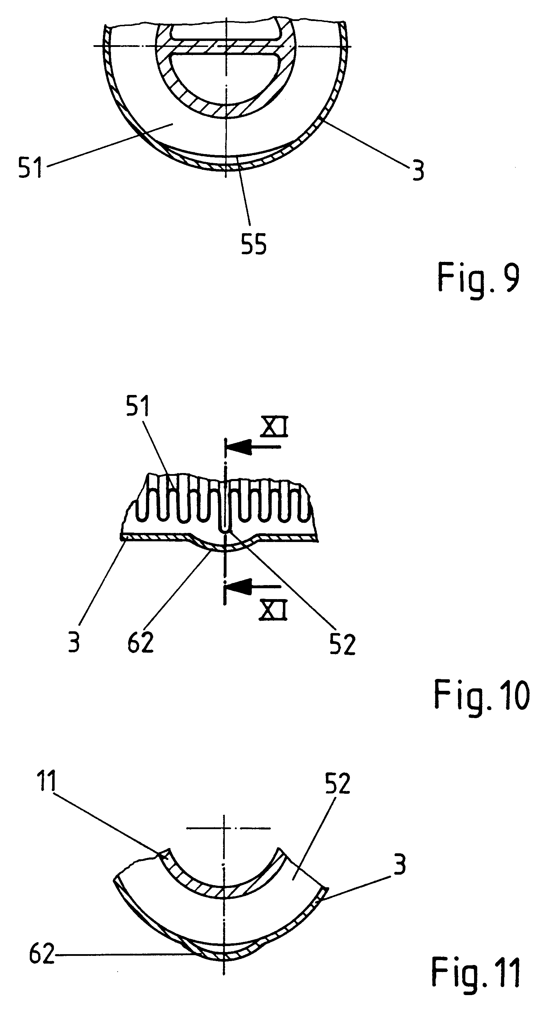

Auch in diesem Falle hat der Balg 51 einen radialen Abstand gegenüber dem Gehäuse, jedoch ist axial mittig zwischen den Anschlußstutzen 20, 22 eine Welle 52 des Balges 51 radial soweit vergrößert, daß sie innen am Gehäuse anliegt. Dadurch wird der Strömungsraum zwischen Gehäuse und Balg in zwei nacheinander in Richtung der Feile 53, 54 durchströmte Räume unterteilt. Damit ein überströmen des Kraftstoffes vom einen Raum in den anderen Raum stattfinden kann, ist die Balgwelle 52 auf der den Anschlußstutzen 21, 22 gegenüberliegenden Seite mit einer örtlichen Eindrückung 55 versehen, deren Gestalt noch einmal aus der Darstellung in Figur 9 deutlicher wird.

Will man bei dieser Bauart die Zahl der vom Kraftstoff durchströmten Räume zwischen den Anschlußstutzen 20 und 22 vergrößern, so können zwischen diesen mehrere der radial erweiterten Balgwellen 52 zweckmäßig symmetrisch in Axialrichtung des Kraftstoffkühlers verteilt angeordnet werden, die dann abwechselnd aufeinander gegenüberliegenden Seiten Eindrückungen 55 haben. Dabei muß nur dafür Sorge getragen werden, daß die jeweils direkt neben den Anschlußstutzen 20, 22 liegenden, radial erweiterten Balgwellen ihre Eindrückung auf der den Anschlußstutzen gegenüberliegenden Seite aufweisen.

Figur 8 zeigt außerdem noch einmal ein Beispiel entsprechend Figur 6 bezüglich der die Gehäuseenden abschließenden Verbindung zwischen dem das Gehäuse bildenden Hohlzylinderabschnitt 3 und dem Balg 51. Auch hier sind entsprechend der Balgwelle 52 die endständigen Balgwellen 56, 57 auf den Durchmesser des Hohlzylinderabschnittes 3 radial vergrößert und axial auf Block gedrückt, so daß ihre außenliegenden Scheitel bei 58, 59 mit dem Gehäuse verschweißt werden können. Der Balg hat dann auch in diesem Fall zylindrisch ausgebildete Hälse 60, 61, die die Anschlüsse für die Kühlmittelführung bilden.

Figur 10 und 11 stellen schließlich einen unteren Ausschnitt aus Figuren 8 und 9 dar, um zu zeigen, daß das Ziel der Eindrückung 55 auch durch eine örtliche Ausbeulung 62 des Hohlzylinderabschnittes 3 erreicht werden kann. Im übrigen gelten für eine solche Bauform die Ausführungen zu den Figuren 8 und 9 entsprechend.

## Patentansprüche

1. Kraftstoffkühler mit einem zylindrischen Gehäuse und einem darin weitgehend koaxial angeordneten, mit seinen Enden dicht am Gehäuse festgelegten gewellten Balg, der über endständige Anschlüsse des Gehäuses von einem Kühlmittel durchströmt ist, während der zwischen Balg und Gehäuse bzw. durch die nach radial außen offenen Balgwellen gebildete Raum über radiale Gehäuseanschlüsse vom zu kühlenden Kraftstoff durchströmt ist,
dadurch gekennzeichnet,
daß in den Balg (10, 51) wenigstens ein hohlzylindrischer Leitkörper (11) mit einem dem lichten Innenquerschnitt des Balges (10, 51) entsprechenden Außenquerschnitt eingesetzt ist, daß der Innenquerschnitt des Leitkörpers (11) durch eine diesen ausfüllende Wand (13) verschlossen ist, daß die Wand (13) sich von einem Ende des Leitkörpers (11) bis zu dessen anderem Ende erstreckt, und daß der Mantel des Leitkörpers (11) auf quer zur Wand (13) einander gegenüberliegenden Seiten wengistens je eine Öffnung (14, 15, 18) zum Durchtritt des Kühlmittels zwischen dem Inneren des Leitkörpers (11) und dem durch die nach radial innen offenen Balgwellen gebildeten Raum aufweist.

2. Kraftstoffkühler nach Anspruch 1,
dadurch gekennzeichnet,
daß die Wand (13) eben ausgebildet ist.

3. Kraftstoffkühler nach Anspruch 1 oder 2,
dadurch gekennzeichnet,
daß die Wand (13) zur Strömungsrichtung (12) des Kühlmittels geneigt angeordnet ist.

4. Kraftstoffkühler nach Anspruch 1,
dadurch gekennzeichnet,
daß die Öffnungen des Leitköpermantels je durch einen sich in Längsrichtung des Leitkörpers (11) erstreckenden Schlitz (14, 15) gebildet sind, und daß sich die Schlitze (14, 15) jeweils vom Treffpunkt der Wand (13) mit dem Leitkörpermantel bis in den Bereich neben dem in Längsrichtung gegenüberliegenden Ende des Leitkörpermantels erstrecken.

5. Kraftstoffkühler nach Anspruch 1,
dadurch gekennzeichnet,
daß die Öffnungen des Leitkörpermantels je durch eine sich in Längsrichtung des Leitkörpers (11) erstreckende Reihe von Bohrungen (18) gebildet sind, und daß sich diese Reihen jeweils vom Treffpunkt der Wand (13) mit dem Leitkörpermantel bis in den Bereich neben dem in Längsrichtung gegenüberliegenden Ende des Leitkörpermantels erstrecken.

6. Kraftstoffkühler nach Anspruch 1,
dadurch gekennzeichnet,
daß in Strömungsrichtung (12) des Kühlmittels die Länge des Leitkörpers (11) im wesentlichen der Länge des Balges (10, 51) entspricht.

7. Kraftstoffkühler nach Anspruch 1,
dadurch gekennzeichnet,
daß in Strömungsrichtung (12) des Kühlmittels wenigstens zwei Leitkörper (11) hintereinander angeordnet sind.

8. Kraftstoffkühler nach Anspruch 7,
dadurch gekennzeichnet,
daß benachbarte Leitkörper (11) senkrecht zur Strömungsrichtung (12) des Kühlmittels um 180° gegeneinander gedreht sind.

9. Kraftstoffkühler nach Anspruch 1,
dadurch gekennzeichnet,
daß der Leitkörper (11) als Spritzgußteil aus kühlmittelbeständigem Kunststoff ausgebildet ist.

10. Kraftstoffkühler nach Anspruch 1,
dadurch gekennzeichnet,
daß die Gehäuseanschlüsse (20, 22) für den Kraftstoff je im Bereich eines der einander gegenüberliegenden Enden des zylindrischen Gehäusemantels (3, 41) gegebenenfalls auf einer gemeinsamen axialen Mantellinie angeordnet sind.

11. Kraftstoffkühler nach Anspruch 10,
dadurch gekennzeichnet,
daß der zwischen Gehäuse (3, 41) und Balg (10, 51) gebildete Raum zwischen den Gehäuseanschlüssen (20, 22) in mehrere in Strömungsrichtung des Kraftstoffes hintereinander geschaltete Strömungsräume unterteilt ist.

12. Kraftstoffkühler nach Anspruch 11,
dadurch gekennzeichnet,
daß Gehäuse und Balg (10) praktisch spielfrei ineinandersitzen, daß der Gehäusemantel (41) im Bereich der Gehäuseanschlüsse (20, 22) nach außen und aufeinander zu gerichtete erste Ausbeulungen (44) aufweist, daß die aufeinander zu gerichteten Enden der ersten Ausbeulungen (44) einen kurzen gegenseitigen Abstand aufweisen, und daß der Gehäusemantel (41) im wesentlichen den Gehäuseanschlüssen (20, 22) gegenüber eine weitere, sich über einen kurzen Umfangsbereich des Gehäusemantels (41) erstreckende Ausbeulung von gegenüber jeder der ersten Ausbeulungen (44) im wesentlichen der doppelten axialen Erstreckung aufweist.

13. Kraftstoffkühler nach Anspruch 11,
dadurch gekennzeichnet,
daß Gehäuse und Balg (10) praktisch spielfrei ineinandersitzen, daß der Gehäusemantel (41) im Bereich der Gehäuseanschlüsse (22, 22) nach außen und aufeinander zu gerichtete erste Ausbeulungen (44) aufweist, daß der Gehäusemantel (41) im wesentlichen den Gehäuseanschlüssen (20, 22) gegenüber je eine weitere, sich über einen kurzen Umfangsbereich des Gehäusemantels (41) erstreckende Ausbeulung von gegenüber jeder der ersten Ausbeulungen (44) im wesentlichen der doppelten axialen Erstreckung aufweist, daß die aufeinander zu gerichteten axialen Enden der weiteren Ausbeulungen einen kurzen gegenseitigen Abstand aufweisen, daß in Axialrichtung zwischen den Gehäuseanschlüssen (20, 22) eine dritte sich über einen kurzen Umfangsbereich erstreckende Ausbeulung des Gehäusemantels (41) vorgesehen ist, und daß die axialen Enden der dritten Ausbeulung einen kurzen axialen Abstand von den jeweils benachbarten Enden der ersten Ausbeulungen (44) aufweisen.

14. Kraftstoffkühler nach Anspruch 11,
dadurch gekennzeichnet,
daß Gehäuse (3) und Balg (10) praktisch spielfrei ineinandersitzen, daß der Balg (10) im Bereich der Gehäuseanschlüsse (20, 22) nach innen und aufeinander zu gerichtete erste Einbeulungsbereiche aufweist, daß die aufeinander zu gerichteten Enden der ersten Einbeulungsbereiche einen kurzen gegenseitigen Abstand aufweisen, und daß der Balg (10) im wesentlichen den Gehäuseanschlüssen (20, 22) gegenüber einen weiteren, sich über einen kurzen Umfangsbereich des Balges erstreckenden Einbeulungsbereich von gegenüber jedem der ersten Einbeulungsbereiche im wesentlichen der doppelten axialen Erstreckung aufweist.

15. Kraftstoffkühler nach Anspruch 11,
dadurch gekennzeichnet,
daß Gehäuse (3) und Balg (10) praktisch spielfrei ineinandersitzen, daß der Balg (10) im Bereich der Gehäuseanschlüsse (20, 22) nach innen und aufeinander zu gerichtete erste Einbeulungsbereiche aufweist, daß der Balg (10) im wesentlichen den Gehäuseanschlüssen (20, 22) gegenüber je einen weiteren, sich über einen kurzen Umfangsbereich des Balges erstreckenden Einbeulungsbereich von gegenüber jedem der ersten Einbeulungsbereiche im wesentlichen der doppelten axialen Erstreckung aufweist, daß die aufeinander zu gerichteten axialen Enden der weiteren Einbeulungsbereiche einen kurzen gegenseitigen Abstand aufweisen, daß in Axialrichtung zwischen den Gehäuseanschlüssen (20, 22) ein dritter sich über einen kurzen Umfangsbereich erstreckende Einbeulungsbereich des Balges (10) vorgesehen ist, und daß die axialen Enden des dritten Einbeulungsbereiches einen kurzen axialen Abstand von den jeweils benachbarten Enden der ersten Einbeulungsbereiche aufweisen.

16. Kraftstoffkühler nach Anspruch 11,
dadurch gekennzeichnet,
daß Gehäuse (3) und Balg (10) einen radialen Abstand voneinander aufweisen, daß der so gebildete Zwischenraum durch einen hohlzylindrischen Führungskörper ausgefüllt ist, daß der Führungskörper im Bereich der Gehäuseanschlüsse (20, 22) erste aufeinander zu gerichtete Ausnehmungen aufweist, daß die aufeinander zu gerichteten Enden der ersten Ausnehmungen einen kurzen gegenseitigen Abstand aufweisen, und daß der Führungskörper im wesentlichen den Gehäuseanschlüssen (20, 22) gegenüber eine weitere, sich über einen kurzen Umfangsbereich erstreckende Ausnehmung von gegenüber jeder der ersten Ausnehmungen im wesentlichen der doppelten axialen Erstreckung aufweist.

17. Kraftstoffkühler nach Anspruch 11,
dadurch gekennzeichnet,
daß Gehäuse (3) und Balg (10) einen radialen Abstand voneinander aufweisen, daß der so gebildete Zwischenraum durch einen hohlzylindrischen Führungskörper (25) ausgefüllt ist, daß der Führungskörper im Bereich der Gehäuseanschlüsse (20, 22) erste aufeinander zu gerichtete Ausnehmungen (26, 27) aufweist, daß der Führungskörper (25) im wesentlichen den Gehäuseanschlüssen (20, 22) gegenüber je eine weitere, sich über einen kurzen Umfangsbereich erstreckende Ausnehmung (28, 29) von gegenüber jeder der ersten Ausnehmungen (26, 27) im wesentlichen der doppelten axialen Erstreckung aufweist, daß die aufeinander zu gerichteten axialen Enden der weiteren Ausnehmungen (28, 29) einen kurzen gegenseitigen Abstand aufweisen, daß in Axialrichtung zwischen den Gehäuseanschlüssen (20, 22) eine dritte sich über einen kurzen Umfangsbereich erstreckende Ausnehmung (30) des Führungskörpers (25) vorgesehen ist, und daß die axialen Enden der dritten Ausnehmung (30) einen kurzen axialen Abstand von den jeweils benachbarten Enden der ersten Ausnehmungen (26, 27) aufweisen.

18. Kraftstoffkühler nach Anspruch 16 oder 17,
dadurch gekennzeichnet,
daß der Führungskörper (25) als Spritzgußteil aus gegenüber dem Kraftstoff beständigem Kunststoff ausgebildet ist.

19. Kraftstoffkühler nach Anspruch 16 oder 17,
dadurch gekennzeichnet,
daß ein einen der Gehäuseanschlüsse (20, 22) bildender Stutzen (20) mit einer an ihm ausgebildeten Nase (34) in das Gehäuseinnere und dort in die zugeordnete Ausnehmung (26) des Führungskörpers (25) ragt.

20. Kraftstoffkühler nach Anspruch 11,
dadurch gekennzeichnet,
daß Gehäuse (3) und Balg (51) einen radialen Abstand voneinander aufweisen, daß eine axial im wesentlichen mittig zwischen den Gehäuseanschlüssen (20, 22) gelegene Balgwelle (52) im Außendurchmesser auf den Innendurchmesser des Gehäuses (3) vergrößert ist, und daß diese Balgwelle (53) und das Gehäuse (3) auf der den Gehäuseanschlüssen (20, 22) abgewandten Seite durch eine örtliche Eindrückung (55) der Balgwelle (52) bzw. örtliche Ausbeulung (62) des Gehäuses (3) einen gegenseitigen Abstand aufweisen.

21. Kraftstoffkühler nach Anspruch 11,
dadurch gekennzeichnet,
daß Gehäuse (3) und Balg (51) einen radialen Abstand voneinander aufweisen, daß der Balg (51) zwischen den Gehäuseanschlüssen (20, 22) axialsymmetrisch verteilt mehrere im Außendurchmesser auf den Innendurchmesser des Gehäuses (3) vergrößerte Balgwellen aufweist, und daß die Balgwellen (52) und das Gehäuse (3) abwechselnd auf einander gegenüberliegenden Seiten durch eine örtliche Eindrückung (55) der Balgwellen (52) bzw. örtliche Ausbeulungen (62) des Gehäuses (3) einen gegenseitigen Abstand derart aufweisen, daß die Eindrückungen (55) bzw. die Ausbeulungen (62) betreffend die den Gehäuseanschlüssen (20, 22) benachbarten Balgwellen (52) den Gehäuseanschlüssen (20, 22) gegenüberliegen.

22. Kraftstoffkühler nach einem oder mehreren der vorhergehenden Ansprüche,
dadurch gekennzeichnet,
daß das Gehäuse aus einem Hohlzylinderabschnitt (3, 41) mit daran endständig befestigten, die Anschlüsse (6, 7) für das Kühlmittel bildenden, sich im wesentlichen radial erstreckenden Deckeln (4, 5) besteht.

23. Kraftstoffkühler nach Anspruch 22,
dadurch gekennzeichnet,
daß die Balgenden in die Befestigung (26, 27) zwischen Hohlzylinderabschnitt (3, 41) und Deckeln (4, 5) mit einbezogen sind.

24. Kraftstoffkühler nach Anspruch 17,
dadurch gekennzeichnet,
daß die zylindrisch ausgebildeten Balgenden innerhalb der Anschlüsse (6, 7) sitzen und in die Befestigung (8, 9) der Anschlüsse (6, 7) an weiterführenden Kühlmittelleitungen (1, 2) mit einbezogen sind.

25. Kraftstoffkühler nach einem oder mehreren der vorhergehenden Ansprüche,
dadurch gekennzeichnet,
daß das Gehäuse aus einem Hohlzylinderabschnitt (3, 41) besteht, daß die Balgenden (43, 60, 61) zylindrisch geformt sind und die Anschlüsse für das Kühlmittel bilden, und daß der Balg (10, 51) mit den Gehäuseenden dicht verbunden ist.

26. Kraftstoffkühler nach einem oder mehreren der vorhergehenden Ansprüche,
dadurch gekennzeichnet,
daß die axiale Breite von nach radial außen offenen Balgwellen und nach radial innen offenen Balgwellen unterschiedlich ist.
